(19) Europäisches Patentamt
European Patent Office
Office européen des brevets

(11) EP 0 751 166 A2

(12) **EUROPÄISCHE PATENTANMELDUNG**

(43) Veröffentlichungstag:
**02.01.1997 Patentblatt 1997/01**

(21) Anmeldenummer: **96109478.6**

(22) Anmeldetag: **13.06.1996**

(51) Int. Cl.$^6$: **C08G 63/81**, C08G 63/78, C09D 5/03, C09J 167/02, C08L 67/02

(84) Benannte Vertragsstaaten:
**AT BE CH DE ES FR GB IT LI LU NL**

(30) Priorität: **27.06.1995 DE 19523261**

(71) Anmelder: **Hoechst Trevira GmbH & Co KG
65929 Frankfurt am Main (DE)**

(72) Erfinder:
- **Simon, Peter, Dr.
65817 Eppstein (DE)**
- **Henze, Andree, Dr.
86199 Augsburg (DE)**
- **Blatter, Karsten, Dr.
65817 Eppstein (DE)**

(54) **Verfahren zur Herstellung von Polyestern und Copolyestern, die danach hergestellten Produkte und deren Verwendung**

(57) Beschrieben wird ein Verfahren zur Herstellung von Polyestern durch Polykondensation von Dicarbonsäure-Diol-Vorkondensaten (Oligomeren) bei erhöhter Temperatur in einem flüssigen Wärmeträger in Gegenwart üblicher Polykondensationskatalysatoren und ggf. cocondensierbarer Modifizierungsmittel, das dadurch gekennzeichnet ist, daß der flüssige Wärmeträger inert und frei ist von aromatischen Baugruppen und einen Siedepunkt im Bereich von 200 bis 320°C hat, daß das Gewichtsverhältnis von eingesetztem Dicarbonsäure-Diol-Vorkondensat (Oligomeren) zu flüssigem Wärmeträger im Bereich von 20:80 bis 80:20 liegt, und daß die Polykondensation im Reaktionsgemisch bei 200 bis 320°C in Gegenwart eines Dispersionsstabilisators ausgeführt wird.
Ferner werden die nach dem Verfahren herstellbaren Polyester und Copolyester beschrieben sowie deren Anwendung.

EP 0 751 166 A2

## Beschreibung

Die vorliegende Erfindung betrifft ein Verfahren zur Herstellung von Polyestern und Copolyestern durch Polykondensation von Dicarbonsäure-Diol-Vorkondensaten (Oligomeren) bei erhöhter Temperatur in einem flüssigen Wärmeträger, bei dem die Polykondensation im Reaktionsgemisch bei 200 bis 320°C in Gegenwart eines Dispersionsstabilisators ausgeführt wird.

Das Verfahren gestattet die Herstellung besonders hochmolekularer Produkte bei schonenden Reaktionsbedingungen. Insbesondere ermöglicht es die Herstellung auch solcher Copolyester in sehr guter Qualität, die bisher nur mit sehr niedrigem Molekulargewicht und Erweichungspunkt erhalten werden konnten.

Die Erfindung betrifft ferner die nach diesem Verfahren herstellbaren Polyester und Copolyester sowie deren Verwendung.

Der technisch bedeutendste und auch im größten Umfang produzierte Polyester ist bisher das Polyethylenterephthalat (im Folgenden wie üblich als PET bezeichnet). Daneben haben auch modifizierte Polyethylenterephthalate, wie z.B. schwer entflammbare Produkte, in die Technik und Textilindustrie Eingang gefunden. Der übliche Weg zur Fabrikation dieser Polyester besteht in der Polykondensation in der Schmelze oder einer zweistufigen Polykondensation, wobei der erste Schritt bis zu einem mittleren Molekulargewicht - entsprechend einer mittleren intrinsischen Viskosität von IV etwa 0,5 bis 0,7 - in der Schmelze, die Weiterkondensation durch Feststoffkondensation ausgeführt wird. Die Polykondensation wird regelmäßig in Gegenwart von bekannten Polykondensationskatalysatoren oder -Katalysatorsystemen ausgeführt. Zur Feststoffkondensation werden Polyesterchips unter vermindertem Druck oder unter Schutzgas solange auf Temperaturen von 180-330°C, vorzugsweise auf 220 bis 240°C erwärmt, bis das gewünschte Molekulargewicht erreicht ist.

Neben der Polykondensation laufen aber auch Nebenreaktionen ab, die teils wieder zu einem Abbau der Polyesterketten führen, teils zur Bildung von Zersetzungsprodukten verschiedenster Art, z.B. von gefärbten Verbindungen oder von Acetaldehyd, führen.

In der Literatur sind auch Polyester aus anderen Ausgangsmaterialien, wie z.B. aus 2,6-Naphthalindicarbonsäure (abgekürzt PEN) und/oder 4,4'-Biphenyldicarbonsäure (abgekürzt PEBB) sowie Copolyester aus diesen Dicarbonsäuren (abgekürzt PENBB) beschrieben worden, denen wertvolle anwendungstechnische Eigenschaften zugeschrieben werden.

Der technischen Nutzbarmachung dieser Polyester stellen sich jedoch Herstellungsschwierigkeiten in den Weg. So ist es bisher nur im Falle von PEN, PETBB und PENBB gelungen, mit technisch hohem Aufwand diese Polyester mit den erforderlichen hohen Molekulargewichten herzustellen.

Zum andern stellt sich z.B. bei PEN oder PENBB der Höherkondensation in der Schmelze die sehr hohe Schmelzviskosität der Produkte in den Weg. Diese Probleme ergeben sich sowohl dann, wenn die Herstellung der Polyester oder Copolyester durch Mischkondensation erfolgen soll, wobei die Ausgangsverbindungen im gewünschten Mischungsverhältnis zunächst gemeinsam umgeestert und oligomerisiert und anschließend polykondensiert werden, als auch dann, wenn sie durch Blend-Kondensation erfolgt, wobei Mischungen der Einzeloligomeren hergestellt und diese anschließend polykondensiert werden.

Im Falle von PET/PEN liegt üblicherweise eine mangelhafte Kristallisationsneigung vor, was dazu führt, daß der Versuch einer Feststoffkondensation zur Steigerung des Molekulargewichtes wegen Verbackens der Polyesterchips scheitert.

Es gibt eine Fülle von Vorschlägen, die Verfahren zur Herstellung von Polyestern betreffen.

Aus derjapanischen Offenlegungsschrift JP-A-60-139717 ist ein Verfahren bekannt zur Herstellung von Polyalkylenterephthalat, bei dem eine Suspension fein pulverisierten Bis-(omega-hydroxyalkyl)-terephthalat oder dessen Oligomeren in einem flüssigen Wärmeüberträger, z.B. in Tetralin, in dem außerdem eine hochpolymere Substanz, beispielsweise Polystyrol, dispergiert ist, in Gegenwart von Kondensationskatalysatoren auf eine Temperatur erwärmt, die über dem Schmelzpunkt der hochpolymeren Substanz liegt, z.B. auf 270°C unter Druck. Man erhält bei diesem Verfahren eine Aufschlämmung von Polyalkylenterephthalat-Partikeln mit einer durchschnittlichen Teilchengröße von 185 µm.

Ein weiteres, ganz ähnliches Verfahren zur Herstellung von Polyalkylenterephthalat ist aus der japanischen Offenlegungsschrift JP-A-60-139717 bekannt. Bei diesem Verfahren werden als Wärmeüberträger beispielsweise Benzol, Methylethylketon, oder Triphenylmethan und als hochpolymere Zusatz-Substanz Polystyrol, PVC oder Polybutadien eingesetzt.

Aus dem DE-C-2 429 087 ist ein Verfahren bekannt zur Herstellung von Polymeren, z.B. von Polyestern, die Füllstoffe (Modifizierungsmittel), z.B. $TiO_2$, enthalten, bei dem die monomeren oder niedermolekularen Ausgangsstoffe, z.B. BHT (Bis-(omega-hydroxyalkyl)-terephthalat oder dessen Oligomeren), und die Füllstoffe in fein verteilter Form in einem flüssigen Wärmeüberträger, nämlich einem Kohlenwasserstoff oder Chlorkohlenwasserstoff, in Gegenwart von speziellen Emulgiermitteln bei erhöhter Temperatur polymerisiert werden. Als Kohlenwasserstoff oder Chlorkohlenwasserstoff werden empfohlen z.B. aliphatische C6-C8 Kohlenwasserstoffe, aromatische Kohlenwasserstoffe wie Benzol und Methylbenzole, Petroleumfraktionen mit bis zu 90 Gew.-% aromatischen Kohlenwasserstoffen, Tetrachlorkohlenstoff, Polychlorethane oder Mono-, Di- oder Trichlorbenzol, die erforderlichenfalls in Kombination mit polaren Lösungsmitteln eingesetzt werden.
Die speziellen Emulgatoren sind Polymere, die zwei unterschiedliche Typen von Polymerketten enthalten z.B. ein Blockpolymer aus Methoxy-Polyethylenglycol und Poly-12-hydroxystearinsäure, das mit Glycidylmethacrylat modifiziert ist.

Ein ganz ähnliches Verfahren, das zur Herstellung von Polyestern, Polyamiden und Polyesteramiden dient, findet sich in der DE-A-27 07 491. Bei diesem Verfahren soll mindestens einer der monomeren Ausgangsstoffe in dem Wärmeträger unlöslich sein und einen Schmelzpunkt haben, der über der Polymerisationstemperatur liegt. Die Polymerisation wird in Gegenwart von Dispergiermitteln für die Monomeren und das erhaltene Polymer durchgeführt, die ein durch den Wärmeträger solvatisierbares und ein an das Monomer- bzw. das Polymerpartikel assoziierbaren Molekülketten-Teil aufweisen.

Ein ähnliches Verfahren ist aus der DE-A-23 19 089 bekannt, bei dem einer der Reaktanden fest und nicht vollständig in dem Wärmeträger gelöst, die anderen Reaktanden gelöst sind. Auch diese Reaktion wird in Gegenwart von Dispergiermitteln für die Monomeren und das erhaltene Polymer durchgeführt, die ein durch den Wärmeträger solvatisierbares und ein an das Monomer- bzw. das Polymerpartikel assoziierbaren Molekülketten-Teil aufweisen. Das Verfahren liefert stabile Polymerdispersionen. Angaben hinsichtlich der Molekulagewichte und zum Acetaldehyd-Gehalt sind dem Dokument nicht zu entnehmen.

Ein weiteres ähnliches Verfahren zur Herstellung von Dispersionen synthetischer Polymerpartikel in einer organischen Flüssigkeit ist aus der DE-A-16 94 461 bekannt. Bei diesem Verfahren erfolgt die Kondensation in einem Wärmeüberträger in Gegenwart eines polymeren Stabilisators, der stark polare Gruppen aufweist, die mit polaren Gruppen des hergestellten Polymers in starke Wechselwirkung treten, so daß der Stabilisator auf den Polymerpartikeln eine sterische Barriere von mindestens 12 Å (Angström) Dicke bildet.

Aus den japanischen Offenlegungsschriften JP-63-41528 und JP-62-39621 ist es bekannt, BHT in fein verteilter Form in einem Wärmeträger in Gegenwart von speziellen Dispergiermitteln zu PET zu kondensieren, wobei als Wärmeträger Siliconöl eingesetzt wird. Als Dispergiermittel werden Copolymere vom Polysiloxan-Vinyl-Typ, z.B. Methacryloyloxypropyl-polyether/Methylsiloxan-methylmethacrylat-Pfropfpolymere oder Methacryloyloxypropyl-polyether-polydimethylsiloxan, eingesetzt.

Aus den deutschen Offenlegungsschriften DE-A-41 17 825 und DE-A-42 26 737 ist ein Verfahren zur Polykondensation von Polyester-Vorkondensaten bekannt, bei dem die Vorkondensate in einem flüssigen inerten Wärmeüberträger bei einer Temperatur unterhalb ihres Schmelzpunktes zu Polyestern mit hohem mittleren Molekulargewicht und enger Molekulargewichtsverteilung polykondensiert werden. Als Wärmeüberträger werden Siliconöle oder perfluorierte organische Verbindungen, z.B. Perfluor-polyether, eingesetzt.

Aus den japanischen Offenlegungsschriften JP-62-39621 und JP-60-141715 ist es bekannt, BHT in fein verteilter Form in einem Wärmeträger in Gegenwart von speziellen Dispergiermitteln zu PET zu kondensieren, wobei als Wärmeträger Siliconöl eingesetzt wird. Als Dispergiermittel werden Pfropfpolymere mit Polysiloxan-Hauptkette und Polyacrylat-Seitenketten oder Acrylat-Hauptkette und Siloxanseitenketten, die über Methacryloyloxypropyl- oder Merkaptogruppen verknüpft sind, eingesetzt.

Aus der Deutschen Offenlegungsschrift DE-A-27 21 501 ist ein Verfahren zur Herstellung von Kondensationspolymeren in einer das Polymer nicht lösenden Flüssigkeit bekannt, bei dem die Ausgangs-Monomeren, von denen mindestens eines in der Flüssigkeit emulgiert sein muß, in Gegenwart eines reaktiven Hochpolymeren polymerisiert werden. Das reaktive Hochpolymere hat eine einfache Kette mit einem Molekulargewicht von 1000 bis 20000 und mindestens einer reaktiven Gruppe, die an der Bildungsreaktion für das Kondensationspolymer teilnehmen kann. Man erhält lagerfähige oder zumindest leicht redispergierbare Polymerdispersionen. Hinweise auf ein Verfahren zur Herstellung von Polymeren mit hohem Molekulargewicht sind dem Dokument nicht zu entnehmen.

Aus US-A-5,296,586 ist ein Verfahren zur Herstellung von Polyestern bekannt, bei welchem die Polykondensation in einer siedenden inerten Flüssigkeit ohne Zusatz von Dispersionsstabilisatoren durchgeführt wird. Dieses Verfahren führt zu einem verklumpten Polyestermaterial, das größere Mengen der inerten Flüssigkeit einschließt.

Aus "Polymer" 33, Nr. 14 (1992), Seiten 3066 bis 3072, ist es bekannt, nicht-wässrige Dispersionen von vollaromatischen flüssigkristallinen Polymeren herzustellen durch Polykondensation der Reaktanten, z.B. 4-Hydroxybenzoesäure und 2-Hydroxy-6-naphthoesäure, in einem flüssigen Wärmeüberträger, z.B. in partiell hydriertem Terphenyl, in Gegenwart polymerer Dispergiermittel, wie z.B. eines Copolymers aus Methyl-methacrylat, Styrol, 2-Ethylhexyl-acrylat und Acrylsäure und eines anorganischen Dispergiermittels, z.B. von hydrophobiertem $SiO_2$.

Die bisher im Stand der Technik beschriebenen Verfahren zur Durchführung von Polykondesationsreaktionen in flüssigen Wärmeträgern wurden hauptsächlich im Hinblick auf die Herstellung stabiler Polymerdispersionen oder im Hinblick auf die Überwindung von Schwierigkeiten, die bei der Herstellung von Polyestern bei der Polykondensation auftreten, durchgeführt. Die mit flüssigen Wärmeträgern arbeitenden Verfahren haben den gemeinsamen Vorteil, daß die Bildung hochviskoser Reaktionsmischungen vermieden wird, eine homogenere Temperaturverteilung in den Ansätzen herrscht, daß in der Regel auch die niedermolekularen Kondensationsprodukte wie Glykol und Wasser leichter aus dem Reaktionsgemisch entfernt werden können und daß Produkte mit höherem mittleren Molekulargewichten, d.h. höherer intrinsischen Viskosität (IV) erhalten werden können.

Die bekannten Verfahren sind jedoch keineswegs universell anwendbar. Der Stand der Technik vermittelt keine Erkenntnisse, über den Einsatz derartiger Polykondensationsverfahren für die Herstellung von Copolyestern, die aufgrund eines besonders hohen amorphen Anteils zu erheblichen Herstellungs- und Verarbeitungsschwierigkeiten führen.

So ist bisher kein Verfahren beschrieben worden, das es ermöglicht, z.B. Copolyester, die 2,6-Naphthalin-dicarbonsäure-Baugruppen in beliebigen Mol.-%-Anteilen enthalten, mit hohem mittleren Molekulargewicht und in nicht klebriger, einwandfrei weiterverarbeitbarer Form auf einfache Weise herzustellen.

Nach herkömmlichen Techniken lassen sich Copolyester aus Terephthalsäure und über ca. 7 bis 8 Mol.-% 2,6-Naphthalin-dicarbonsäure nur bis zu einem mittleren Molekulargewicht $M_w$ von etwa 15000 bis 25000 herstellen. Aus einem solchen Polyester lassen sich zwar Chips herstellen, die Weiterverarbeitung derselben bereitet aber erheblich Schwierigkeiten oder ist unmöglich, weil das Material beim Erwärmen oberhalb der Glasübergangstemperatur sehr klebrig wird.
Die Herstellung von Polyestern aus 2,6-Naphthalin-dicarbonsäure z.B. scheitert an der sehr hohen Schmelzviskosität der Polykondensationsschmelze. In diesem Fall ist zwar eine Feststoffkondensation möglich, diese erfordert aber eine lange Reaktionszeit, was die Herstellung nicht nur sehr verteuert, sondern auch den Ablauf von Nebenreaktionen, d.h. die Bildung von Nebenprodukten, begünstigt.

Es wurde nun überraschend gefunden, daß sich auch derartige Polyester, die nach bekannten Methoden nicht in der erforderlichen Qualität erhalten werden können, bei relativ niedriger Polykondensationstemperatur in ausgezeichneter Reinheit und mit sehr hohen mittleren Molekulargewichten $M_w$ herstellen lassen, wenn man die Polykondensation in bestimmten nichtwässrigen Wärmeträgern und vorzugsweise unter definierten Reaktionsbedingungen ausführt.

Mit Hilfe des erfindungsgemäßen Verfahrens ist die Herstellung von Polyestern in Pulverform möglich. Die d50-Werte (Maß zur Partikelgrößenverteilung) liegen unterhalb von 2000 µm, vorzugsweise unterhalb von 1000 µm, insbesondere unterhalb 500 µm.

Das erfindungsgemäße Verfahren ist universeller anwendbar als bisher bekannte Verfahren.

Wesentliche Vorteile des erfindungsgemäßen Verfahrens sind:

- apparativ einfacher Aufbau, kein Vakuum oder Druck erforderlich,
- preiswerte Wärmeüberträger,
- kommerziell erhältliche Dispersionsstabilisatoren,
- hohe Anfangsmonomerkonzentrationen möglich; bis zu 70 Gew.-% Monomerkonzentration im Startgemisch führen noch zu stabilen Polymerdispersionen,
- hohes Molekulargewicht erreichbar,
- vergleichsweise kurze Reaktionszeit,
- niederer Acetaldehydgehalt,
- in bevorzugter Ausführungsform durch spezielles Rührerdesign weiter verbesserter Abtrieb des Diols bei der Polykondensation (dadurch weiter erhöhte Polykondensationsgeschwindigkeit und Unterdrückung von Nebenreaktionen) verbunden mit sehr guter Stickstoffverteilung in der Dispersion.

Ein Gegenstand der vorliegenden Erfindung ist somit ein Verfahren zur Herstellung von Polyestern in Pulverform durch Polykondensation von Dicarbonsäure-Diol-Vorkondensaten (Oligomeren) bei erhöhter Temperatur in einem flüssigen Wärmeträger in Gegenwart üblicher Polykondensationskatalysatoren und ggf. cokondensierbarer Modifizierungsmittel, das dadurch gekennzeichnet ist, daß der flüssige Wärmeträger inert und frei ist von aromatischen Baugruppen und einen Siedepunkt im Bereich von 200 bis 320°C, vorzugsweise von 220 bis 300°C, insbesondere von 240 bis 285°C, hat,
daß das Gewichtsverhältnis von eingesetzten Oligomeren zu flüssigem Wärmeträger im Bereich von 20:80 bis 80:20, vorzugsweise im Bereich von 30:70 bis 70:30, insbesondere im Bereich von 50:50 bis 70:30, liegt, und daß die Polykondensation im Reaktionsgemisch bei 200 bis 320°C in Gegenwart eines Dispersionsstabilisators ausgeführt wird.

Das als Ausgangsmaterial für das erfindungsgemäße Verfahren eingesetzte Dicarbonsäure-Diol-Vorkondensat ist ein Reaktionsprodukt aus einer oder mehreren Dicarbonsäuren der Formel HOOC-A-COOH und ggf. Hydroxycarbonsäuren HO-A-COOH oder funktioneller Derivate dieser Di- oder Hydroxycarbonsäuren, mit einem oder mehreren Diolen der Formel HO-D-OH, (wobei A und D zweiwertige organische Baugruppen sind), in dem sich neben den bei der Reaktion gebildeten Estern auch niedere Polykondensationsprodukte (Oligomere), und in der Regel auch noch geringe Mengen der Dicarbon- oder Hydroxycarbonsäuren - bzw. von deren funktionellen Derivaten - und von Diolen befinden.

Von besonderem Vorteil ist es, wenn das beim erfindungsgemäßen Verfahren eingesetzte Dicarbonsäure-Diol-Vorkondensat (Oligomer), erhalten durch Umsetzung von Dicarbonsäure-bis-niederalkylestern mit einem Diol in einem inerten, flüssigen Wärmeträger, der - im technischen Sinne - frei ist von aromatischen Baugruppen und einen Siedepunkt im Bereich von 200 bis 320°C, vorzugsweise von 220 bis 300°C, insbesondere von 240 bis 285°C, hat, wobei das Gewichtsverhältnis von eingesetztem Dicarbonsäure-Diol-Vorkondensat (Oligomeren) zu flüssigem Wärmeträger im Bereich von 20:80 bis 80:20, vorzugsweise im Bereich von 30:70 bis 70:30, insbesondere im Bereich von 50:50 bis

70:30, liegt, ggf. in Gegenwart eines Dispersionsstabilisators und in Gegenwart bekannter Umesterungskatalysatoren so hoch erhitzt wird, daß das bei der Umesterung freigesetzte niedere Alkanol abdestilliert.

Der vorstehend genannte inerte, flüssige Wärmeträger ist - im technischen Sinne - frei von aromatischen Baugruppen, d.h. er enthält maximal 2 Gew.-%, vorzugsweise maximal 1 Gew.-%, aromatische Bestandteile. Beispiele für derartige Wärmeträger sind u.a. ®Isopar P, ®Isopar V, ®Exxsol D120, ®Exxsol D140 und ®Norpar 15 (der Firma EXXON CHEMICALS).

Besonders bevorzugte Wärmeträger sind aliphatische Kohlenwasserstoffe, die keine aromatischen Baugruppen enthalten.

Zweckmäßigerweise erwärmt man das Reaktionsgemisch in einer vorgelagerten Reaktionsphase auf eine Temperatur, die ca. 5 bis 50°C, vorzugsweise 10 bis 40°C, über dem Schmelzpunkt des Dicarbonsäure-bis-niederalkylesters, mindestens aber ca. 5 bis 50°C, vorzugsweise 10 bis 40°C oberhalb des Siedepunktes des abzudestillierenden Alkanols liegt.

Bei dieser Arbeitsweise kann mit besonderem Vorteil für die Herstellung des Dicarbonsäure-Diol-Vorkondensat (Oligomeren) der gleiche Wärmeträger eingesetzt werden, der für die oben beschriebene erfindungsgemäße Polykondensation benutzt wird. Das erfindungsgemäße Verfahren kann dann, ausgehend von den monomeren Ausgangsmaterialien, Dicarbonsäurebis-niederalkylester und Diol, in einem in zwei Abschnitten ablaufenden "Eintopf-Prozeß" ausgeführt werden.

In einer speziellen Ausführungsform des erfindungsgemäßen Verfahrens wird ein Dicarbonsäure-Diol-Vorkondensat eingesetzt, das im analytischen Mittel, bezogen auf die Summe aller Dicarbonsäurebaugruppen = 100 Mol.-%,

70 bis 100 Mol-% Baugruppen der Formel $-CO-A^1-CO-$ (I)

0 bis 30 Mol-% Baugruppen der Formel $-CO-A^2-CO-$ (II)

0 bis 50 Mol.-% Baugruppen der Formel $-O-A^3-CO-$ (III)

sowie Diol-Baugruppen der Formeln $-O-D^1-O-$ (IV) und $-O-D^2-O-$ (V) aufweist, worin

- $A^1$ 1,4-Phenylen-, 2,6-Naphthylen- oder 4,4'-Biphenylen-Reste, die einzeln oder in beliebiger Mischung vorliegen können,
- $A^2$ von $A^1$ verschiedene aromatische Reste oder araliphatische Reste mit 5 bis 16, vorzugsweise 6 bis 12 C-Atomen oder cyclische oder acyclische aliphatische Reste mit 2 bis 10 Kohlenstoffatomen, vorzugsweise 4 bis 8 Kohlenstoffatomen,
- $A^3$ aromatische Reste mit 5 bis 12, vorzugsweise 6 bis 10 C-Atomen
- $D^1$ Alkylen- oder Polymethylengruppen mit 2 bis 4 Kohlenstoffatomen oder Cycloalkan- oder Dimethylen-cycloalkangruppen mit 6 bis 10 C-Atomen,
- $D^2$ von $D^1$ verschiedene Alkylen- oder Polymethylengruppen mit 3 bis 4 Kohlenstoffatomen oder Cycloalkan- oder Dimethylen-cycloalkangruppen mit 6 bis 10 C-Atomen oder geradkettige oder verzweigte Alkandiyl-Gruppen mit 4 bis 16, vorzugsweise 4 bis 8, C-Atomen oder Reste der Formel $-(C_2H_4-O)_m-C_2H_4-$, worin m eine ganze Zahl von 1 bis 40 bedeutet, wobei m = 1 oder 2 für Anteile bis zu 20 Mol.-% bevorzugt sind und Gruppen mit m = 10 bis 40 vorzugsweise nur in Anteilen von unter 5 Mol.-% vorhanden sind, bedeuten.

Die aromatischen Reste $A^2$ und $A^3$ können ihrerseits noch einen oder zwei Substituenten tragen. Vorzugsweise tragen substituierte Reste $A^2$ und $A^3$ nur einen Substituenten. Besonders geeignete Substituenten sind Alkyl mit 1 bis 4 C-Atomen, Alkoxy mit 1 bis 4 C-Atomen, Chlor und die Sulfonsäuregruppe.

Entsprechend den obigen Angaben ist das als Ausgangsmaterial für die spezielle Ausführungsform des erfindungsgemäßen Verfahrens eingesetzte Dicarbonsäure-Diol-Vorkondensat ein Reaktionsprodukt aus einer oder mehreren, vorzugsweise bis zu drei, insbesondere einer oder zwei, Dicarbonsäuren der Formel $HOOC-A^1-COOH$ und ggf. einer oder mehrerer Dicarbonsäuren der Formel $HOOC-A^2-COOH$ oder Hydroxycarbonsäuren der Formel $HO-A^3-COOH$, oder funktioneller Derivate solcher Di- oder Hydroxycarbonsäuren, mit einem oder mehreren Diolen der Formel $HO-D^1-OH$, und ggf. einem oder mehreren Diolen der Formel $HO-D^2-OH$, in dem sich neben den aus den Ausgangsmaterialien gebildeten Estern auch niedere Polykondensationsprodukte (Oligomere), und in der Regel auch noch geringe Mengen der Ausgangsmaterialien befinden.

Das als Ausgangsmaterial eingesetzte Dicarbonsäure-Diol-Vorkondensat (im folgenden Text synonym auch als Oligomer bezeichnet) der angegebenen Zusammensetzung kann dadurch erhalten werden, daß man die erforderlichen Dicarbonsäuren oder deren funktionellen Derivate, z.B. deren Niederalkylester, in den erforderlichen Mengenverhältnissen zunächst mit den erforderlichen Diolen in den gewünschten Mengenverhältnissen umestert, wobei in der Regel bereits eine gewisse Kondensation zu Oligomerengemischen einsetzt. Anschließend kann ggf. noch bis zu einem gewünschten höheren Oligomerisationsgrad kondensiert werden.

Die Umsetzung der Dicarbonsäuren mit den Diolen kann ohne Katalysatorzusatz erfolgen, bei Einsatz funktioneller Säurederivate werden zweckmäßigerweise bekannte geeignete Katalysatoren, bei Einsatz von Niederalkylestern z.B. Umesterungskatalysatoren wie Mangansalze, zugesetzt.

Die Dicarbonsäure-Diol-Vorkondensate können in der gewünschten Zusammensetzung jedoch vorzugsweise

dadurch erhalten werden, daß man Vorkondensate der einzelnen, für die Cokondensation vorgesehenen Dicarbonsäuren mit den gewünschten Diolen im gewünschten Mischungsverhältnis miteinander mischt.
Diese Methode hat den erheblichen technischen Vorteil, daß man die Umesterung und ggf. Oligomerisierung nur mit wenigen Einzelverbindungen in festen äquimolaren Verhältnissen ausführen muß. Aus den "auf Vorrat" hergestellten Einzel-Oligomeren kann dann leicht jede für das erfindungsgemäße Verfahren gewünschte Oligomerenzusammensetzung durch eine einfache Mischoperation hergestellt werden.

Für die Herstellung eines Copolyesters vorgegebener Zusammensetzung nach dem erfindungsgemäßen Verfahren ist es wichtig, die Zusammensetzung des Vorkondensats so einzurichten, daß die oben für $A^1$, $A^2$ und $A^3$ angegebenen Mol.-%-Anteile eingehalten werden. Der erfindungsgemäß hergestellte Polyester weist dann nahezu die gleiche Mol.-%-Anteile der Baugruppen $A^1$, $A^2$ und $A^3$ auf wie das eingesetzte Vorkondensat.

Die Anteile der Diole im Vorkondensat ist in der Regel vom Anteil der Baugruppen IV und V im fertigen Polyester verschieden. Soll nach dem erfindungsgemäßen Verfahren ein Polyester hergestellt werden, der bezüglich der Diolbaugruppen eine vorgegebene Zusammensetzung hat, so ist durch einige Vorversuche zu ermitteln, welche Diolanteile im Vorkondensat sein müssen, um das gewünschte Endprodukt zu erhalten. Sofern die Reaktionsgeschwindigkeitsparameter der einzelnen Diole und die Zusammensetzungen ihrer Azeotrope mit dem Wärmeträger bei der Reaktionstemperatur bekannt sind, können für eine gewünschte Polyester-Zusammensetzung auch die im Vorkondensat erforderlichen Diol-Anteile berechnet werden. Da die Bestimmung dieser Parameter zwar Routine, aber doch arbeitsintensiv ist, führt in der Praxis die routinemäßige Durchführung der Vorversuche schneller zum Ziel.

Die genaue Kenntnis der im Vorkondensat enthaltenen Einzelsubstanzen ist für die Durchführung des erfindungsgemäßen Verfahrens nicht erforderlich.

Wie bereits oben angegeben, besteht ein besonderer Vorteil des erfindungsgemäßen Verfahrens darin, daß man mit seiner Hilfe auch viele Copolyester in sehr guter Ausbeute und mit hohem mittleren Molekulargewicht herstellen kann, die nach herkömmlichen Methoden nicht in fester, nicht klebriger Form erhalten werden können. Das Verfahren zeigt beispielsweise seine besonderen Vorteile dann, wenn ein Dicarbonsäure-Diol-Vorkondensat eingesetzt wird, in dem $A^1$, bezogen auf die Gesamtmenge der Baugruppen $A^1$, zu
8 bis 92 Mol.-% aus 1,4-Phenylenresten und zu
8 bis 92 Mol.-% aus 2,6-Naphthylenresten,
vorzugsweise zu
16 bis 84 Mol.-% aus 1,4-Phenylenresten und zu
16 bis 84 Mol.-% aus 2,6-Naphthylenresten
insbesondere zu
30 bis 70 Mol.-% aus 1,4-Phenylenresten und zu
30 bis 70 Mol.-% aus 2,6-Naphthylenresten besteht.

Ein weiterer besonderer Vorteil des erfindungsgemäßen Verfahrens besteht darin, daß es die Herstellung besonders hochmolekularer Polyester und Copolyester unter überraschend milden Reaktionsbedingungen und in relativ kurzer Reaktionszeit erlaubt, wobei in vielen Fällen eine deutlich engere Molgewichtsverteilung erzielt werden kann.

Dies gilt sowohl für die einheitlichen, oder nur leicht modifizierten Polyester, in denen $A^1$ ausschließlich 1,4-Phenylenreste oder 2,6-Naphthylenreste oder 4,4'-Biphenylenreste sind, sondern auch insbesondere für Copolyester, die erhalten werden, wenn ein Dicarbonsäure-Diol-Vorkondensat eingesetzt wird, in dem $A^1$, bezogen auf die Gesamtmenge der Baugruppen $A^1$, zu
8 bis 92 Mol.-%, vorzugsweise zu 16 bis 84 Mol.-%, insbesondere zu 30 bis 70 Mol.-%, aus 1,4-Phenylenresten und zu
8 bis 92 Mol.-%, vorzugsweise zu 16 bis 84 Mol.-%, insbesondere zu 30 bis 70 Mol.-%, aus 4,4'-Biphenylenresten besteht.

Entsprechende Vorteile ergeben sich auch, wenn ein Dicarbonsäure-Diol-Vorkondensat eingesetzt wird, in dem $A^1$, bezogen auf die Gesamtmenge der Baugruppen $A^1$, zu
8 bis 92 Mol.-%, vorzugsweise zu 16 bis 84 Mol.-%, insbesondere zu 30 bis 70 Mol.-%, aus 2,6-Naphthylenresten und zu
8 bis 92 Mol.-%, vorzugsweise zu 16 bis 84 Mol.-%, insbesondere zu 30 bis 70 Mol.-%, aus 4,4'-Biphenylenresten besteht.

Bevorzugt ist das erfindungsgemäße Verfahren auch wenn ein Dicarbonsäure-Diol-Vorkondensat eingesetzt wird, in dem $A^1$ 1,4-Phenylen- und 2,6-Naphthylen- und 4,4'-Biphenylen-Reste enthält, wobei, bezogen auf die Gesamtmenge der Baugruppen $A^1$, die Summe der 1,4-Phenylen- und 2,6-Naphthylenreste oder die Summe der 1,4-Phenylen- und 4,4'-Biphenylenreste oder die Summe der 2,6-Naphthylen- und 4,4'-Biphenylenreste 8 bis 92 Mol.-%, vorzugsweise zu 16 bis 84 Mol.-%, insbesondere zu 30 bis 70 Mol.-%, beträgt.

Weiterhin ist das erfindungsgemäße Verfahren bevorzugt zur Polykondensation solcher Dicarbonsäure-Diol-Vorkondensate, in denen keine Baugruppen der Formel III vorhanden sind, oder in denen $D^1$ Ethylen, Tetramethylen oder 1,4-Dimethylen-cyclohexan, insbesondere Ethylen oder Tetramethylen ist.

Gut geeignet als Dispersionsstabilisatoren für das erfindungsgemäße Verfahren sind amphiphile Copolymere oder oberflächenmodifizierte Schichtsilikate.

Bevorzugt werden amphiphile Copolymere oder modifizierte anorganische Verbindungen als Dispersionsstabilisatoren. Es sind dies z.B. mit Trialkylammoniumsalzen oberflächenmodifizierte Schichtsilikate, vorzugsweise mit Trialkylammoniumsalzen oberflächenmodifiziertes Bentonit, oder amphiphile Copolymere aus einer polaren Polymereinheit, z.B. Polyvinylpyrrolidon und einer unpolaren Polymereinheit, z.B. langkettigen alpha-Olefinen. Die vorstehend genannten Dispersionsstabilisatoren werden in Mengen zwischen 0,01 und 5 Gew.-%, bevorzugt zwischen 0,1 und 4 Gew.-%, eingesetzt.

In einer bevorzugten praktischen Ausführungsform des erfindungsgemäßen Verfahrens werden zunächst die Ausgangsstoffe, Oligomeren, Polykondensationskatalysatoren und ggf. weitere Zusatzstoffe mit dem flüssigen Wärmeüberträger gemischt, die Mischung auf erhöhte Temperatur, zweckmäßigerweise zwischen 80, vorzugsweise 130, insbesondere 160°C und der Polykondensationstemperatur, erhitzt und dann der Dispersionsstabilisator oder das Dispersionsstabilisator-Gemisch, wobei hier insbesondere ein amphiphiles Copolymer eingesetzt wird, eingerührt.

Cocondensierbare Modifizierungsmittel im Sinne dieser Erfindungsbeschreibung sind Verbindungen, die mindestens zwei zur Esterbildung befähigte funktionelle Gruppen aufweisen, sodaß sie im Verlauf der Polykondensationsreaktion in eine Polyesterkette eingebaut werden können, und die dem hergestellten Polyester bestimmte gewünschte Eigenschaften verleihen. Cocondensierbare Modifizierungsmittel können in einer Menge von bis zu 15 Gew.-%, vorzugsweise bis zu 10 Gew.-%, in dem Copolykondensationsansatz vorhanden sein.
Charakteristische Beispiele für solche cocondensierbare Modifizierungsmittel sind Phosphinsäurederivate der allgemeinen Formeln

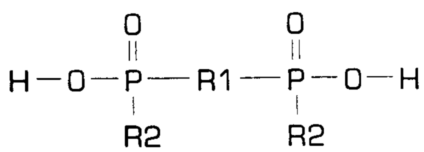

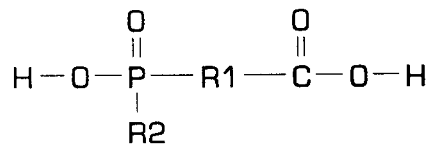

VI und VII

worin R1 Alkylen oder Polymethylen mit 2 bis 6 C-Atomen oder Phenyl, vorzugsweise Ethylen, und R2 Alkyl mit 1 bis 6 C-Atomen, Aryl oder Aralkyl, vorzugsweise Methyl, Ethyl, Phenyl, oder o-, m- oder p-Methylphenyl, insbesondere Methyl, bedeuten, oder deren funktionelle Derivate, wie z. B.

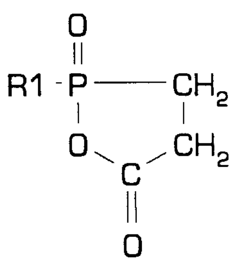

(®PHOSPHOLAN der Firma Hoechst AG)

Durch Einkondensieren dieser Verbindungen werden in die Copolyesterkette Baugruppen der Formeln VIII und IX

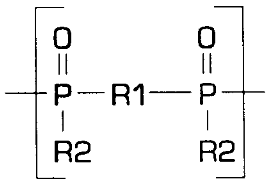 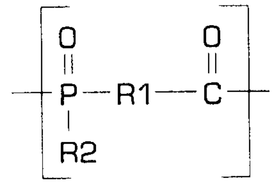

VIII und IX

eingeführt. Die in dieser Weise modifizierten Copolyester sind erheblich schwerer entflammbar als die entsprechenden unmodifizierten Copolyester.

Wie oben bereits angegeben, wird die Polykondensation vorzugsweise im siedenden Reaktionsgemisch ausgeführt, so daß das entstehende Polykondensationsprodukt vorteilhafterweise fließfähig bzw. geschmolzen vorliegt. Vorzugsweise wird dem Reaktionsgemisch soviel Wärme zugeführt, daß es recht kräftig siedet, d.h. daß ein deutlicher Rücklauf des Wärmeträgers zu beobachten ist. Die Stärke des Rücklaufs kann durch Regulierung der Heizungstemperatur leicht eingestellt werden.

Bei dieser Verfahrensweise werden niedermolekulare Reaktionsprodukte der Polykondensationsreaktion ausgekreist.

Hierbei ist es von besonderem Vorteil, daß sich die niedermolekularen Reaktionsprodukte in dem erfindungsgemäß einzusetzenden Wärmeträger nur in sehr geringer Menge lösen. Sie scheiden sich daher aus dem Destillat aus, bilden eine eigene, meist spezifisch schwerere Phase und können daher leicht von dem Wärmeträger abgetrennt werden. Für derartige Trennungen von unmischbaren Flüssigkeiten, die sich bei azeotropen Destillationen ergeben, werden in der Praxis sogenannte "Wasserabscheider" benutzt.
Diese Vorrichtungen stellen in der Regel zylindrische Gefäße dar mit einem oberen und einem unteren Auslauf und ggf. einer noch über dem oberen Auslauf liegenden Druckausgleichsöffnung. Der untere Auslauf gestattet die Entnahme der spezifisch schwereren Phase des Azeotrops, der obere Auslauf die Entnahme der spezifisch leichteren Phase. Die Ausläufe des Wasserabscheiders werden so installiert und verrohrt, daß der Wärmeträger, der bei der Destillation auch gleichzeitig als Schleppmittel des Azeotrops wirkt, in den Reaktor zurückgeführt wird und die andere Phase des Azeotrops in zeitlichen Abständen oder kontinuierlich entnommen werden kann.

Ein weiterer Gegenstand der vorliegenden Erfindung sind die nach dem erfindungsgemäßen Verfahren hergestellten Polyester und Copolyester.

Gegenüber herkömmlich hergestellten Produkten zeichnen sie sich durch eine besonders hohe Reinheit, insbesondere einen sehr niedrigen Acetaldehydgehalt von kleiner 20 ppm, vorzugsweise kleiner 10 ppm, insbesondere kleiner 5 ppm, bei sehr hohen mittleren Molekulargewichten ($M_w$) und oftmals auch engerer Molekulargewichtsverteilung aus.
Das vorstehende mittlere Molekulargewicht (angegeben in g/mol und gemessen mittels GPC) liegt im Falle von PET und PET/PEN-Copolyestern oberhalb von 100000, vorzugsweise oberhalb von 150000, insbesondere oberhalb von 200000.
Im Falle von PEN, PENBB-, PEBB-, PETBB- und PENTBB-Copolyestern liegt das mittlere Molekulargewicht oberhalb von 40000, vorzugsweise oberhalb von 60000, insbesondere oberhalb von 80000. Unter der Bezeichnung PENTBB wird ein Copolyester [Poly = "P"] enthaltend 2,6-Naphthalindicarbonsäure-Einheiten ["N"], 4,4'-Biphenylendicarbonsäure-Einheiten ["BB"], Terephthalsäure-Einheiten ["T"] und Ethylenglykol-Einheiten ["E"] verstanden.

Eine Gruppe bevorzugter erfindungsgemäßer Polyester ist dadurch gekennzeichnet, daß sie, bezogen auf die Gesamtheit aller Baugruppen, aus
35 bis 50 Mol-% Baugruppen der Formel $-CO-A^1-CO-$ (I)
0 bis 15 Mol-% Baugruppen der Formel $-CO-A^2-CO-$ (II)
35 bis 50 Mol-% Baugruppen der Formel $-O-D^1-O-$ (IV)
0 bis 15 Mol-% Baugruppen der Formel $-O-D^2-O-$ (V)
und
0 bis 25 Mol.-% Baugruppen der Formel $-O-A^3-CO-$ (III)
aufgebaut sind,
und ggf. bis zu 15 Gew.-% von cocondensierbaren Modifizierungsmitteln abgeleitete Baugruppen aufweisen,
worin

$A^1$ 1,4-Phenylen-, 2,6-Naphthylen- oder 4,4'-Biphenylen-Reste, wobei sich $A^1$ aus mindestens zwei dieser Baugruppen-Arten zusammensetzt und jede der in $A^1$ enthaltenen Baugruppen, bezogen auf die Gesamtmenge der Baugruppen $A^1$, zu mindestens 8 Mol.-% vorliegt,

$A^2$ von $A^1$ verschiedene aromatische Reste oder araliphatische Reste mit 5 bis 16, vorzugsweise 6 bis 12 C-Atomen oder cyclische oder acyclische aliphatische Reste mit 2 bis 10 Kohlenstoffatomen, vorzugsweise 4 bis 8 Kohlenstoffatomen,

$A^3$ aromatische Reste mit 5 bis 12, vorzugsweise 6 bis 10 C-Atomen,

$D^1$ Alkylen- oder Polymethylengruppen mit 2 bis 4 Kohlenstoffatomen oder Cycloalkan- oder Dimethylen-cycloalkangruppen mit 6 bis 10 C-Atomen,

$D^2$ von $D^1$ verschiedene Alkylen- oder Polymethylengruppen mit 3 bis 4 Kohlenstoffatomen oder Cycloalkan- oder Dimethylen-cycloalkangruppen mit 6 bis 10 C-Atomen oder geradkettige oder verzweigte Alkandiyl-Gruppen mit 4 bis 16, vorzugsweise 4 bis 8, C-Atomen oder Reste der Formel $-(C_2H_4-O)_m-C_2H_4-$, worin m eine ganze Zahl von 1 bis 40 bedeutet, wobei m = 1 oder 2 für Anteile bis zu 20 Mol.-% bevorzugt sind und Gruppen mit m = 10 bis 40 vorzugsweise nur in Anteilen von unter 5 Mol.-% vorhanden sind, bedeuten.

Bevorzugt sind insbesondere solche erfindungsgemäßen Polyester und Copolyester, die sich nach herkömmlichen Methoden nicht oder nur in mangelhafter Qualität, nach dem erfindungsgemäßen Verfahren dagegen in sehr guter Qualität herstellen lassen.

Eine Gruppe bevorzugter erfindungsgemäßer Polyester, die sich bislang nur nach dem erfindungsgemäßen Verfahren in guter Qualität herstellen lassen, sind Polyester aus Baugruppen I und IV und ggf. Baugruppen II, III und V, in denen $A^1$, bezogen auf die Gesamtmenge der Baugruppen $A^1$, zu
8 bis 92 Mol.-% aus 1,4-Phenylenresten und zu
8 bis 92 Mol.-% aus 2,6-Naphthylenresten,
vorzugsweise zu
16 bis 84 Mol.-% aus 1,4-Phenylenresten und zu
16 bis 84 Mol.-% aus 2,6-Naphthylenresten
insbesondere zu
30 bis 70 Mol.-% aus 1,4-Phenylenresten und zu
30 bis 70 Mol.-% aus 2,6-Naphthylenresten besteht.

Besonders hochmolekulare erfindungsgemäße Polyester und Copolyester, mit deutlich engerer Molgewichtsverteilung und hoher Reinheit sind solche, in denen $A^1$ ausschließlich 1,4-Phenylenreste oder 2,6-Naphthylenreste oder 4,4'-Biphenylenreste sind sowie insbesondere Copolyester, in denen $A^1$, bezogen auf die Gesamtmenge der Baugruppen $A^1$, zu
8 bis 92 Mol.-%, vorzugsweise zu 16 bis 84 Mol.-%, insbesondere zu 30 bis 70 Mol.-%, aus 1,4-Phenylenresten und zu
8 bis 92 Mol.-%, vorzugsweise zu 16 bis 84 Mol.-%, insbesondere zu 30 bis 70 Mol.-%, aus 4,4'-Biphenylenresten besteht.

Weitere bevorzugte Polyester sind solche, in denen $A^1$, bezogen auf die Gesamtmenge der Baugruppen $A^1$, zu
8 bis 92 Mol.-%, vorzugsweise zu 16 bis 84 Mol.-%, insbesondere zu 30 bis 70 Mol.-%, aus 2,6-Naphthylenresten und zu
8 bis 92 Mol.-%, vorzugsweise zu 16 bis 84 Mol.-%, insbesondere zu 30 bis 70 Mol.-%, aus 4,4'-Biphenylenresten besteht,
sowie solche, in denen $A^1$ 1,4-Phenylen- und 2,6-Naphthylen- und 4,4'-Biphenylen-Reste enthält, wobei, bezogen auf die Gesamtmenge der Baugruppen $A^1$,
die Summe der 1,4-Phenylen- und 2,6-Naphthylenreste oder
die Summe der 1,4-Phenylen- und 4,4'-Biphenylenreste oder
die Summe der 2,6-Naphthylen- und 4,4'-Biphenylenreste 8 bis 92 Mol.-%, vorzugsweise 16 bis 84 Mol.-%, insbesondere 30 bis 70 Mol.-%, beträgt.

Weiterhin bevorzugt sind solche erfindungsgemäßen Copolyester in denen keine Baugruppen der Formel III vorhanden sind, oder in denen $D^1$ Ethylen, Tetramethylen oder 1,4-Dimethylen-cyclohexan, insbesondere Ethylen oder Tetramethylen ist.

Die erfindungsgemäßen Polyester eignen sich ausgezeichnet für Beschichtungszwecke, z.B. für Pulverlackierung nach dem Tauchverfahren oder durch Wirbelbettbeschichtung, allgemein für Pulverapplikationen, wie z.B. als pulverförmiger Schmelzkleber oder als Bindemittel für Preßmassen, oder für die Herstellung extrudierter Formkörper, wie z.B. Flaschen, Folien oder Filamente und Fasern für den technischen oder textilen Einsatzbereich.

Die folgenden Ausführungsbeispiele veranschaulichen die Ausführung der vorliegenden Erfindung.

Beispiel 1

In einem Reaktor, der mit Zuläufen, Rührwerk, Destillationsaufsatz mit Wasserabscheider und Lösemittelrücklauf versehen ist, werden 7 kg eines Gemisches aliphatischer Kohlenwasserstoffe mit einem Siedebereich, der bei 275°C

beginnt (®ISOPAR V) mit 120 g oberflächenmodifiziertem Bentonit (®BENTONE 38) und 40g Propylencarbonat kräftig gerührt, sodaß in der Masse hohe Scherkräfte auftreten. Dies wird beispielsweise durch Verwendung eines Ultra-Turrax bewerkstelligt. Dann werden 3 kg eines 2,6-Naphthalin-dicarbonsäure/Ethylenglycol-Vorkondensats mit einem durchschnittlichen Umesterungsgrad von 90 - 100 % und 1,2 g Antimontrioxid unter weiterem kräftigen Rühren zugemischt. Danach wird die Mischung zum starken Sieden erwärmt, wobei eine gleichmäßige Verteilung der Mischungsbestandteile in dem Kohlenwasserstoff-Gemisch erhalten wird.

Die Mischung wird 6 Stunden lang unter weiterem Rühren unter Rückfluß gekocht und aus dem erhaltenen Destillat von Zeit zu Zeit das im Wasserabscheider abgeschiedene Glycol abgelassen. Das im Abscheider überstehende Kohlenwasserstoffgemisch läßt man in den Reaktor zurücklaufen.
Die Innentemperatur des Reaktors stellt sich bei dieser Arbeitsweise auf 280°C ein. In Abständen von jeweils 1,5 Stdn wurden Proben des Reaktionsgemisches entnommen und die durchschnittliche Partikelgröße des Polyesters bestimmt. Es ergaben sich folgende Werte:

| | | | | |
|---|---|---|---|---|
| Reaktionsdauer (Stdn.): | 1,5 | 3,0 | 4,5 | 6,0 |
| Partikelgröße (µm): | 16 | 16 | 13 | 17 |

Nach Ablauf der Reaktionszeit wurde der Ansatz abgekühlt und der erhaltene Polyester durch Filtration vom Kohlenwasserstoffgemisch abgetrennt, gewaschen, getrocknet und gewogen. Die Ausbeute betrug 2979 g, entsprechend 99,3% der Theorie.

Beispiel 2a (Vergleich mit Beispiel 1)

Zum Vergleich wurde das Beispiel 1 wiederholt mit dem Unterschied, daß anstelle des dort als Wärmeträger eingesetzten Kohlenwasserstoffgemisches ein Aliphatengemisch mit einem Siedebereich von ca. 325 bis 500°C (®THERMIA E) eingesetzt wurde. Dabei wurde die Reaktionstemperatur wie im Beispiel 1 auf ca. 280°C eingestellt. Während der Reaktionszeit destillierte das bei der Kondensation freigesetzte Glykol aus dem Ansatz ab, der Wärmeträger kommt jedoch nicht zum Sieden.
Wie im Beispiel 1 wurde nach 6 Stunden die Polykondensation abgebrochen und die Partikelgröße bestimmt. Sie betrug 52 µm. Nach dem Aufarbeiten wie oben beschrieben wurden 2970 g Polyester erhalten (Ausbeute ca.99% d.Th).

Beispiel 2b (Vergleich mit Beispiel 1)

Als weiterer Vergleich zum Produkt des Beispiels 1 wurde Polyethylennaphthalat in herkömmlicher Weise durch eine Schmelzekondensation hergestellt. Hierzu wurden 1000 g 2,6-Naphthalindicarbonsäuredimethylester zunächst mit 500 ml Ethylenglykol in Gegenwart von 300 mg Mangan-(II)-acetat (mit 4 Mol Kristallwasser) bei 200°C zum Naphthalin-dicarbonsäure-diglykolester und Oligomeren umgeestert. Nach Beendigung der Methanolabspaltung wurden dem Ansatz 410 mg Phosphorsäuremethylester und 390 mg Antimontrioxid zugefügt und die Schmelze 3 Stdn. bei 300°C unter einem Druck von 0,1 mbar polykondensiert.
Die Eigenschaften des erhaltenen Polyesters finden sich in den folgenden Tabellen.

Beispiel 3

In einem Reaktor, der mit Zuläufen, Rührwerk, Destillationsaufsatz mit Wasserabscheider und Lösemittelrücklauf ausgestattet ist, werden 7 kg eines Gemisches aliphatischer Kohlenwasserstoffe mit einem Siedebereich, der bei 240°C beginnt (®Isopar P) mit 3 kg eines Dicarbonsäure-Diol-Vorkondensats, bestehend aus einer Mischung von 20 Gew.-% 2,6-Naphthalindicarbonsäure/Ethylenglycol-Vorkondensat und 80 Gew.-% Terephthalsäure/Ethylenglycol-Vorkondensat, unter kräftigem Rühren gemischt. Die Mischung wird auf eine Innentemperatur von ca. 260°C erwärmt und dann 140 g eines Polyvinylpyrrolidon/Polyolefin-Copolymerisats (®ANTARON V 220) zugesetzt.
Es wird eine homogene milchige Emulsion des Polyester-Vorkondensats in dem Kohlenwasserstoff-Gemisch erhalten.
Die Mischung wird unter weiterem Rühren zum kräftigen Sieden erhitzt, und aus dem erhaltenen Destillat von Zeit zu Zeit das im Wasserabscheider abgeschiedene Glycol abgelassen. Das überstehende Kohlenwasserstoffgemisch läßt man in den Reaktor zurücklaufen.
Die Innentemperatur des Reaktors stellt sich bei dieser Arbeitsweise auf ca. 260°C ein; sie wurde über einen Zeitraum von 6 Stdn. gehalten.

Nach Ablauf der Reaktionszeit wurde der Ansatz abgekühlt, der erhaltene Polyester vom Kohlenwasserstoffgemisch abfiltriert, gewaschen mit Petrolether, getrocknet und gewogen. Die Ausbeute betrug 2960 g, entsprechend 98,6% der Theorie.

Zu praktisch dem gleichen Ergebnis gelangt man, wenn man anstelle von 7 kg des Wärmeträgers nur 3 kg, 2 kg oder 1,3 kg des Wärmeträgers einsetzt.

Beispiele 4 und 5

Der Ansatz des Beispiels 3 wurde wiederholt mit dem Unterschied, daß ein Dicarbonsäure/Diol-Vorkondensat eingesetzt wurde bestehend aus einer Mischung von 50 Gew.-% 2,6-Naphthalindicarbonsäure/Ethylenglycol-Vorkondensat und 50 Gew.-% Terephthalsäure/Ethylenglycol-Vorkondensat oder von 80 Gew.-% 2,6-Naphthalindicarbonsäure/Ethylenglycol-Vorkondensat und 20 Gew.-% Terephthalsäure/Ethylenglycol-Vorkondensat.
Die Ausbeuten betrugen 99,1 bzw. 95,8 % der Theorie.
Die Zusammensetzung der erhaltenen Polyester wurde durch $^{1}$H-NMR-Spektroskopie überprüft. Es wurden folgende Ergebnisse erhalten:

Verhältnis der 2,6-Naphthalindicarbonsäure/Terephthalsäure-Baugruppen im Polyester in Mol.-%:

| | | | |
|---|---|---|---|
| Theoretisch: | 17,27/82,72 | 45,52/54,48 | 76,97/23,03 |
| Nach NMR: | 13,5/86,5 | 42,2/57,8 | 78,5/21,5 |

Beispiel 6

In einem Reaktor, der mit Zuläufen, Rührwerk, Destillationsaufsatz mit Wasserabscheider und Lösemittelrücklauf versehen ist, werden 7 kg eines Gemisches aliphatischer Kohlenwasserstoffe mit einem Siedebereich, der bei 240°C beginnt (®ISOPAR P) mit 210 g oberflächenmodifiziertem Bentonit (®BENTONE 38) und 40g Propylencarbonat kräftig gerührt, so daß in der Masse hohe Scherkräfte auftreten. Dann werden 3 kg eines Terephthalsäure/Ethylenglycol-Vorkondensats mit einem durchschnittlichen Umesterungsgrad von 90 - 100 % und 1,2 g Antimontrioxid unter weiterem kräftigen Rühren zugemischt. Danach wird die Mischung zum starken Sieden erwärmt, wobei eine gleichmäßige Verteilung der Mischungsbestandteile in dem Kohlenwasserstoff-Gemisch erhalten wird.
Die Mischung wird 6 Stunden lang unter weiterem Rühren unter Rückfluß gekocht (die Innentemperatur beträgt 260°C) und aus dem erhaltenen Destillat von Zeit zu Zeit das im Wasserabscheider abgeschiedene Glycol abgelassen. Das im Abscheider überstehende Kohlenwasserstoffgemisch läßt man in den Reaktor zurücklaufen.

In Abständen von jeweils 1,5 Stdn wurden Proben des Reaktionsgemisches entnommen und die durchschnittliche Partikelgröße des Polyesters bestimmt. Es ergaben sich folgende Werte:

| | | | | |
|---|---|---|---|---|
| Reaktionsdauer (Stdn.): | 1,5 | 3,0 | 4,5 | 6,0 |
| Partikelgröße (µm): | 92 | 105 | 125 | 110 |

Nach Ablauf der Reaktionszeit wurde der Ansatz abgekühlt und der erhaltene Polyester durch Filtration vom Kohlenwasserstoffgemisch abgetrennt, gewaschen, getrocknet und gewogen. Die Ausbeute betrug 99,1% der Theorie.
Die Eigenschaften des Produkts finden sich in der folgenden Tabelle.

Beispiele 6b, 6c und 6d

Anstelle von ®BENTONE wurde ®ANTARON V220 in einer Menge von 1 %, bezogen auf die Menge des Vorkondensats, eingesetzt.
Als Wärmeüberträger wurden Gemische aus ®ISOPAR P und ®ISOPAR V in den Gewichtsverhältnissen 20:80, 50:50 und 10:90 verwendet.
Die Umsetzungstemperatur und Reaktionszeit wurde wie in Beispiel 6 eingestellt.
Abhängig von der Zusammensetzung des Wärmeträgergemisches wurden unterschiedlich hohe Molekulargewichte erreicht. Diese Beispiele veranschaulichen den Einfluß des Rücklaufverhältnisses des Wärmeträgers auf das Molekulargewicht.

Beispiel 7 (Vergleich zu Beispiel 6)

Das Beispiel 6 wurde genau nachgearbeitet, mit dem Unterschied, daß anstelle des dort eingesetzten Wärmeträgers 7 kg eines Wärmeträgers mit einem Siedebereich von 355 bis 530°C (®Santotherm 66) eingesetzt wurde. Die Reaktortemperatur wurde wie im Beispiel 6 auf 260°C eingestellt und 6 Stunden gehalten.
Die Mischung kommt bei diesen Bedingungen nicht zum Sieden.
Nach Ablauf der Reaktionszeit wurde der Ansatz abgekühlt und der erhaltene Polyester durch Filtration vom Kohlenwasserstoffgemisch abgetrennt, gewaschen, getrocknet und gewogen. Die Ausbeute betrug nur 82,3% der Theorie.
Die Eigenschaften des Produkts finden sich in der folgenden Tabelle.

Beispiel 8 (Vergleich zu Beispiel 6)

Als weiterer Vergleich zum Produkt des Beispiels 1 wurde Polyethylenterephthalat in herkömmlicher Weise durch eine Schmelzekondensation hergestellt. Hierzu wurden 1000 g Terephthalsäuredimethylester zunächst mit 600 ml Ethylenglykol in Gegenwart von 330 mg Mangan-(II)-acetat (mit 4 Mol Kristallwasser) bei 200°C zum Terephthalsäurediglykolester und Oligomeren umgeestert. Nach Beendigung der Methanolabspaltung wurden dem Ansatz 410 mg Phosphorsäure-methylester und 390 mg Antimontrioxid zugefügt und die geschmolzene Mischung 3 Stdn. bei 280°C unter einem Druck von 0,1 mbar polykondensiert.
Die Eigenschaften des erhaltenen Polyesters finden sich in den folgenden Tabellen.

Beispiel 9

In einem Reaktor mit Zuläufen, Rührwerk, Destillationsaufsatz mit Phasentrenner und Lösemittelrücklauf werden 33 kg eines Terephthalsäure/Ethylenglykol-Vorkondensats mit 29 kg eines aliphatischen Kohlenwasserstoffgemisches mit einem Siedebereich der bei 240°C beginnt (Isopar P/Isopar V im Volumenverhältnis 75:25), 285 g Antaron V 220 und 11,1 g Antimontrioxid eingewogen und innerhalb von 2 Stunden von Raumtemperatur auf eine Temparatur von 260-270°C erhitzt, so daß das Gemisch kräftig siedet. Die Mischung wird 6 Stunden unter Rückfluß gehalten (Innentemperatur 266°C) und das aus dem Destillat ausgetragene Glykol über den Phasentrenner abgelassen.

Von den nach den Beispielen 1 bis 9 erhaltenen Polyestern wurden folgende Parameter bestimmt:

1) Die Glasübergangstemperatur $T_g$ und die Kristallit-Schmelztemperatur $T_m$. Die Bestimmung dieser Größen erfolgte durch DSC mit einer Aufheizrate von 10°C/min.
2) Die spezifische Viskosität $V_S$. ($V_S = (t/t_0)-1$) Diese Größe wurde in einer Lösung von 1 g des Polyesters in 100 ml Dichloressigsäure (DCE) bei den in der Tabelle angegebenen Temperaturen [°C] bestimmt. Die Lösezeit beträgt 90 Minuten. Die Messung erfolgt bei 25°C.
3) Die mittleren Molekulargewichte $M_n$ und $M_w$.
Diese Werte wurden durch Gelpermeationschromatographie (GPC) mit einer Mischung von Hexafluorisopropanol/Chloroform 3:97 (Vol.-%) als mobiler Phase an Polystyrol gegen Polyethylenterephthalat-Standards ermittelt.
4) Die Bestimmung der Teilchengrößen (d50-Wert) erfolgte mittels eines ®MALVERN-MASTER-SIZER X durch Laserlicht-Beugung in n-Heptan unter Zusatz von ®Span 80.
5) Die Bestimmung des freien Acetaldehyd-Gehaltes erfolgte, indem 1g Polyesterpulver 20 Minuten bei 140°C in einem geschlossenen Gefäß getempert wurde und anschließend eine gaschromatographische Dampfraumanalyse erfolgte. Die Kalibrierung erfolgt durch Helium/Acetaldehyd-Gemische.

Die erhaltenen Meßresultate sind in der folgenden Tabelle angegeben worden. Die Tabelle enthält in der vorletzten Spalte außerdem den Quotienten $M_w/M_n = U$, der dem Fachmann eine Vorstellung von der Breite der Molekulargewichtsverteilung vermittelt.

Tabelle 1, Zusammensetzung und Verfahrensbedingungen

| Beispiel Nr. | Vorkondensat | Wärmeüberträger (WÜ) | Siedebereich des WÜ [°C] | Reaktionstemperatur [°C] | Zusammensetzung [Gew.-%] |
|---|---|---|---|---|---|
| 1 | PEN | Isopar V | 274-315 | 280 | 100 % PEN |
| 2a | PEN | Thermia E | 325-530 | 280 | 100 % PEN |
| 2b | PEN | (Schmelze) | --- | 300 | 100 % PEN |
| 3 | PET/PEN | Isopar P | 240-270 | 260 | 80:20 |
| 4 | PET/PEN | Isopar P | 240-270 | 260 | 50:50 |
| 4b | PET/PEN | (Schmelze) | --- | 280 | 50:50 |
| 5 | PET/PEN | Isopar P | 240-270 | 260 | 20:80 |
| 6 | PET | Isopar P | 240-270 | 260 | 100 % PET |
| 6a | PET | Isopar P/Isopar V 20:80 (v) | 260-270 | 262 | 100 % PET |
| 6b | PET | Isopar P/Isopar V 50:50 | 260-270 | 262 | 100 % PET |
| 6c | PET | Isopar P/Isopar V 90:10 | 255-265 | 262 | 100 % PET |
| 7 | PET | Santotherm 66 | 355-530 | 260 | 100 % PET |
| 8 | PET | (Schmelze) | --- | 280 | 100 % PET |
| 9 | PET | Isopar P/Isopar V 75:25 | 240 - 320 | 266 | 100% PET |

Tabelle 2, Eigenschaften der in den Beispielen 1 bis 8 erhaltenen Polyester.

| Beispiel Nr. | $T_g$ [°C] | $T_m$ [°C] | $V_s$ in DCE | $M_n$ | $M_w$ | $U = M_w/M_n$ | Teilchengröße [d50] in [µm] | Acetaldehyd-Gehalt in [ppm] |
|---|---|---|---|---|---|---|---|---|
| 1 | | | 0,467 [bei 80°C] | 17600 | 45733 | 2,60 | 52 | 0,6 |
| 2a | | | 0,778 [bei 80°C] | 5213 | 25410 | 4,88 | 17 | 1,3 |
| 2b | 125 | 272 | 0,622 [bei 80°C] | 14030 | 34375 | 2,45 | --- | |
| 3 | 107,12 | | 1,750 [bei 60°C] | 56628 | 162170 | 2,86 | 253 | |
| 4 | 96,9 | | 1,924 [bei 60°C] | 51143 | 159140 | 3,11 | 203 | |
| | | | | 9435 | 21064 | 2,23 | | |
| 5 | 86,9 | | 1,680 [bei 60°C] | 44747 | 136510 | 3,05 | 225 | |
| 6 | 79 | 243 | 1,890 [bei 60°C] | 36090 | 133010 | 3,69 | s.Text | |
| 6a | | | | 14469 | 32225 | 2,23 | | 6,3 |
| 6b | | | | 25560 | 61865 | 2,42 | 80 | 4,8 |
| 6c | | | | 53766 | 217310 | 4,04 | 184 | 3,3 |
| 7 | 66 | 233 | 0,353 [bei 60°C] | 4810 | 15728 | 3,27 | | |
| 8 | 86 | 251 | 0,859 [bei 60°C] | 20242 | 54024 | 2,67 | --- | 41,2 |
| 9 | 82 | 251 | ----------- | 39649 | 119050 | 3,0 | --- | --- |

**Patentansprüche**

1. Verfahren zur Herstellung von Polyestern in Pulverform durch Polykondensation von Dicarbonsäure-Diol-Vorkondensaten (Oligomeren) bei erhöhter Temperatur in einem flüssigen Wärmeträger in Gegenwart üblicher Polykondensationskatalysatoren und ggf. cocondensierbarer Modifizierungsmittel, dadurch gekennzeichnet, daß der flüssige Wärmeträger inert und frei ist von aromatischen Baugruppen und einen Siedepunkt im Bereich von 200 bis 320°C, vorzugsweise von 220 bis 300°C, insbesondere von 240 bis 285°C, hat, daß das Gewichtsverhältnis von eingesetztem Dicarbonsäure-Diol-Vorkondensat (Oligomeren) zu flüssigem Wärmeträger im Bereich von 20:80 bis 80:20, vorzugsweise im Bereich von 30:70 bis 70:30, insbesondere im Bereich von 50:50 bis 70:30, liegt, und daß die Polykondensation im Reaktionsgemisch bei 200 bis 320°C in Gegenwart eines Dispersionsstabilisators ausgeführt wird.

2. Verfahren nach Anspruch 1, dadurch gekennzeichnet, daß das Dicarbonsäure-Diol-Vorkondensat (Oligomer), erhalten durch Umsetzung von Dicarbonsäure-bis-niederalkylestern mit einem Diol in einem flüssigen Wärmeträger, der frei ist von aromatischen Baugruppen und einen Siedepunkt im Bereich von 200 bis 320°C, vorzugsweise von 220 bis 300°C, insbesondere von 240 bis 285°C, hat, wobei das Gewichtsverhältnis von eingesetztem Dicarbonsäure-Diol-Vorkondensat (Oligomeren) zu flüssigem Wärmeträger im Bereich von 20:80 bis 80:20, vorzugsweise im Bereich von 30:70 bis 70:30, insbesondere im Bereich von 50:50 bis 70:30, liegt, ggf. in Gegenwart eines Dispersionsstabilisators und in Gegenwart bekannter Umesterungskatalysatoren so hoch erhitzt, daß das bei der Umesterung freigesetzte niedere Alkanol abdestilliert.

3. Verfahren gemäß mindestens einem der Ansprüche 1 und 2, dadurch gekennzeichnet, daß ein Dicarbonsäure-Diol-Vorkondensat eingesetzt wird, das im analytischen Mittel, bezogen auf die Summe aller Dicarbonsäurebaugruppen = 100 Mol.-%,
70 bis 100 Mol-% Baugruppen der Formel $-CO-A^1-CO-$ (I)
0 bis 30 Mol-% Baugruppen der Formel $-CO-A^2-CO-$ (II)
0 bis 50 Mol.-% Baugruppen der Formel $-O-A^3-CO-$ (III)
sowie Diol-Baugruppen der Formeln $-O-D^1-O-$ (IV) und $-O-D^2-O-$ (V) aufweist,
worin

$A^1$ 1,4-Phenylen-, 2,6-Naphthylen- oder 4,4'-Biphenylen-Reste, die einzeln oder in beliebiger Mischung vorliegen können,
$A^2$ von $A^1$ verschiedene aromatische Reste oder araliphatische Reste mit 5 bis 16, vorzugsweise 6 bis 12 C-Atomen oder cyclische oder acyclische aliphatische Reste mit 2 bis 10 Kohlenstoffatomen, vorzugsweise 4 bis 8 Kohlenstoffatomen,
$A^3$ aromatische Reste mit 5 bis 12, vorzugsweise 6 bis 10 C-Atomen
$D^1$ Alkylen- oder Polymethylengruppen mit 2 bis 4 Kohlenstoffatomen oder Cycloalkan- oder Dimethylen-cycloalkangruppen mit 6 bis 10 C-Atomen,
$D^2$ von $D^1$ verschiedene Alkylen- oder Polymethylengruppen mit 3 bis 4 Kohlenstoffatomen oder Cycloalkan- oder Dimethylen-cycloalkangruppen mit 6 bis 10 C-Atomen oder geradkettige oder verzweigte Alkandiyl-Gruppen mit 4 bis 16, vorzugsweise 4 bis 8, C-Atomen oder Reste der Formel $-(C_2H_4-O)_m-C_2H_4-$, worin m eine ganze Zahl von 1 bis 40 bedeutet, wobei m = 1 oder 2 für Anteile bis zu 20 Mol.-% bevorzugt sind und Gruppen mit m = 10 bis 40 vorzugsweise nur in Anteilen von unter 5 Mol.-% vorhanden sind, bedeuten.

4. Verfahren gemäß mindestens einem der Ansprüche 1 bis 3, dadurch gekennzeichnet, daß ein Dicarbonsäure-Diol-Vorkondensat eingesetzt wird, in dem $A^1$, bezogen auf die Gesamtmenge der Baugruppen $A^1$, zu
8 bis 92 Mol.-% aus 1,4-Phenylenresten und zu
8 bis 92 Mol.-% aus 2,6-Naphthylenresten besteht.

5. Verfahren gemäß mindestens einem der Ansprüche 1 bis 4, dadurch gekennzeichnet, daß ein Dicarbonsäure-Diol-Vorkondensat eingesetzt wird, in dem $A^1$, bezogen auf die Gesamtmenge der Baugruppen $A^1$, zu
16 bis 84 Mol.-% aus 1,4-Phenylenresten und zu
16 bis 84 Mol.-% aus 2,6-Naphthylenresten besteht.

6. Verfahren gemäß mindestens einem der Ansprüche 1 bis 5, dadurch gekennzeichnet, daß ein Dicarbonsäure-Diol-Vorkondensat eingesetzt wird, in dem $A^1$, bezogen auf die Gesamtmenge der Baugruppen $A^1$, zu
30 bis 70 Mol.-% aus 1,4-Phenylenresten und zu
30 bis 70 Mol.-% aus 2,6-Naphthylenresten besteht.

7. Verfahren gemäß mindestens einem der Ansprüche 1 bis 6, dadurch gekennzeichnet, daß ein Dicarbonsäure-Diol-Vorkondensat eingesetzt wird, in dem $A^1$, bezogen auf die Gesamtmenge der Baugruppen $A^1$, zu
8 bis 92 Mol.-%, vorzugsweise zu 16 bis 84 Mol.-%, aus 1,4-Phenylenresten und zu

8 bis 92 Mol.-%, vorzugsweise zu 16 bis 84 Mol.-%, aus 4,4'-Biphenylenresten besteht.

**8.** Verfahren gemäß mindestens einem der Ansprüche 1 bis 7, dadurch gekennzeichnet, daß ein Dicarbonsäure-Diol-Vorkondensat eingesetzt wird, in dem $A^1$, bezogen auf die Gesamtmenge der Baugruppen $A^1$, zu
8 bis 92 Mol.-%, vorzugsweise zu 16 bis 84 Mol.-%, aus 2,6-Naphthylenresten und zu
8 bis 92 Mol.-%, vorzugsweise zu 16 bis 84 Mol.-%, aus 4,4'-Biphenylenresten besteht.

**9.** Verfahren gemäß mindestens einem der Ansprüche 1 bis 8, dadurch gekennzeichnet, daß ein Dicarbonsäure-Diol-Vorkondensat eingesetzt wird, in dem $A^1$ 1,4-Phenylen- und 2,6-Naphthylen- und 4,4'-Biphenylen-Reste enthält, wobei, bezogen auf die Gesamtmenge der Baugruppen $A^1$,
die Summe der 1,4-Phenylen- und 2,6-Naphthylenreste oder
die Summe der 1,4-Phenylen- und 4,4'-Biphenylenreste oder
die Summe der 2,6-Naphthylen- und 4,4'-Biphenylenreste 8 bis 92 Mol.-%, vorzugsweise 16 bis 84 Mol.-%, beträgt.

**10.** Verfahren gemäß mindestens einem der Ansprüche 1 bis 9, dadurch gekennzeichnet, daß ein Dicarbonsäure-Diol-Vorkondensat eingesetzt wird, in dem keine Baugruppen der Formel III vorhanden sind.

**11.** Verfahren gemäß mindestens einem der Ansprüche 1 bis 10, dadurch gekennzeichnet, daß ein Dicarbonsäure-Diol-Vorkondensat eingesetzt wird, in dem $D^1$ Ethylen, Tetramethylen oder 1,4-Dimethylen-cyclohexan ist.

**12.** Verfahren gemäß mindestens einem der Ansprüche 1 bis 11, dadurch gekennzeichnet, daß ein Dicarbonsäure-Diol-Vorkondensat eingesetzt wird, in dem $D^1$ Ethylen oder Tetramethylen ist.

**13.** Verfahren gemäß mindestens einem der Ansprüche 1 bis 12, dadurch gekennzeichnet, daß der Dispersionsstabilisator ein amphiphiles Copolymer oder ein oberflächenmodifiziertes Schichtsilikat ist und in einer Menge zwischen 0,01 und 5 Gew.-% eingesetzt wird.

**14.** Verfahren gemäß mindestens einem der Ansprüche 1 bis 13, dadurch gekennzeichnet, daß der Dispersionsstabilisator ein mit Trialkylammoniumsalzen oberflächenmodifiziertes Schichtsilikat, vorzugsweise ein mit Trialkylammoniumsalzen oberflächenmodifiziertes Bentonit ist.

**15.** Verfahren gemäß mindestens einem der Ansprüche 1 bis 14, dadurch gekennzeichnet, daß der Dispersionsstabilisator ein amphiphiles Copolymer aus einer polaren Polymereinheit, z.B. Polyvinylpyrrolidon und einer unpolaren Polymereinheit, z.B. langkettigen alpha-Olefinen, ist.

**16.** Verfahren gemäß mindestens einem der Ansprüche 1 bis 15, dadurch gekennzeichnet, daß zunächst die Ausgangsstoffe, Oligomeren, Polykondensationskatalysatoren und ggf. weitere Zusatzstoffe mit dem flüssigen Wärmeüberträger gemischt werden, die Mischung auf erhöhte Temperatur, zweckmäßigerweise zwischen 80°C, vorzugsweise 130°C, insbesondere 160°C und der Polykondensationstemperatur, erhitzt wird und dann der Dispersionsstabilisator oder das Dispersionsstabilisator-Gemisch eingerührt wird.

**17.** Verfahren gemäß mindestens einem der Ansprüche 1 bis 16, dadurch gekennzeichnet, daß die Polykondensation im siedenden Reaktionsgemisch ausgeführt wird.

**18.** Verfahren gemäß mindestens einem der Ansprüche 1 bis 17, dadurch gekennzeichnet, daß der Wärmeträger ein aliphatischer Kohlenwasserstoff ist, der maximal 2 Gew.-% aromatische Bestandteile enthält.

**19.** Verfahren gemäß mindestens einem der Ansprüche 1 bis 18, dadurch gekennzeichnet, daß der Wärmeträger ein aliphatischer Kohlenwasserstoff ist.

**20.** Verfahren gemäß mindestens einem der Ansprüche 1 bis 19, dadurch gekennzeichnet, daß niedermolekulare Reaktionsprodukte der Polykondensationsreaktion ausgekreist werden.

**21.** Polyester und Copolyester, hergestellt nach dem Verfahren des Anspruchs 1.

**22.** Polyester und Copolyester gemäß Anspruch 21, dadurch gekennzeichnet, daß $A^1$ ausschließlich 1,4-Phenylenreste oder 2,6-Naphthylenreste oder 4,4'-Biphenylreste sind.

**23.** Polyester und Copolyester herstellbar nach dem Verfahren des Anspruchs 1, dadurch gekennzeichnet, daß sie,

bezogen auf die Gesamtheit aller Polyesterbaugruppen (I) bis (V), aus
35 bis 50 Mol-% Baugruppen der Formel $-CO-A^1-CO-$ (I)
0 bis 15 Mol-% Baugruppen der Formel $-CO-A^2-CO-$ (II)
35 bis 50 Mol-% Baugruppen der Formel $-O-D^1-O-$ (IV)
0 bis 15 Mol-% Baugruppen der Formel $-O-D^2-O-$ (V)
und
0 bis 25 Mol.-% Baugruppen der Formel $-O-A^3-CO-$ (III)
aufgebaut sind,
und ggf. bis zu 15 Gew.-% von cocondensierbaren Modifizierungsmitteln abgeleitete Baugruppen aufweisen, worin

$A^1$ 1,4-Phenylen-, 2,6-Naphthylen- oder 4,4'-Biphenylen-Reste, wobei sich $A^1$ aus mindestens zwei dieser Baugruppen-Arten zusammensetzt und jede der in $A^1$ enthaltenen Baugruppen, bezogen auf die Gesamtmenge der Baugruppen $A^1$, zu mindestens 8 Mol.-% vorliegt,
$A^2$ von $A^1$ verschiedene aromatische Reste oder araliphatische Reste mit 5 bis 16, vorzugsweise 6 bis 12 C-Atomen oder cyclische oder acyclische aliphatische Reste mit 2 bis 10 Kohlenstoffatomen, vorzugsweise 4 bis 8 Kohlenstoffatomen,
$A^3$ aromatische Reste mit 5 bis 12, vorzugsweise 6 bis 10 C-Atomen,
$D^1$ Alkylen- oder Polymethylengruppen mit 2 bis 4 Kohlenstoffatomen oder Cycloalkan- oder Dimethylen-cycloalkangruppen mit 6 bis 10 C-Atomen,
$D^2$ von $D^1$ verschiedene Alkylen- oder Polymethylengruppen mit 3 bis 4 Kohlenstoffatomen oder Cycloalkan- oder Dimethylen-cycloalkangruppen mit 6 bis 10 C-Atomen oder geradkettige oder verzweigte Alkandiyl-Gruppen mit 4 bis 16, vorzugsweise 4 bis 8, C-Atomen oder Reste der Formel $-(C_2H_4-O)_m-C_2H_4-$` worin m eine ganze Zahl von 1 bis 40 bedeutet, wobei m = 1 oder 2 für Anteile bis zu 20 Mol.-%

bevorzugt sind und Gruppen mit m = 10 bis 40 vorzugsweise nur in Anteilen von unter 5 Mol.-% vorhanden sind, bedeuten.

**24.** Polyester und Copolyester gemäß Anspruch 23, dadurch gekennzeichnet, daß sie aus Baugruppen I und IV und ggf. Baugruppen II, III und V aufgebaut sind, und $A^1$, bezogen auf die Gesamtmenge der Baugruppen $A^1$, zu
8 bis 92 Mol.-% aus 1,4-Phenylenresten und zu
8 bis 92 Mol.-% aus 2,6-Naphthylenresten besteht.

**25.** Polyester und Copolyester gemäß mindestens einem der Ansprüche 23 und 24, dadurch gekennzeichnet, daß sie aus Baugruppen I und IV und ggf. Baugruppen II, III und V aufgebaut sind, und $A^1$, bezogen auf die Gesamtmenge der Baugruppen $A^1$, zu
16 bis 84 Mol.-% aus 1,4-Phenylenresten und zu
16 bis 84 Mol.-% aus 2,6-Naphthylenresten besteht.

**26.** Polyester und Copolyester gemäß mindestens einem der Ansprüche 23 bis 25, dadurch gekennzeichnet, daß sie aus Baugruppen I und IV und ggf. Baugruppen II, III und V aufgebaut sind, und $A^1$, bezogen auf die Gesamtmenge der Baugruppen $A^1$, zu
30 bis 70 Mol.-% aus 1,4-Phenylenresten und zu
30 bis 70 Mol.-% aus 2,6-Naphthylenresten besteht.

**27.** Polyester und Copolyester gemäß mindestens einem der Ansprüche 23 bis 26, dadurch gekennzeichnet, daß sie aus Baugruppen I und IV und ggf. Baugruppen II, III und V aufgebaut sind, und $A^1$, bezogen auf die Gesamtmenge der Baugruppen $A^1$, zu
8 bis 92 Mol.-%, vorzugsweise zu 16 bis 84 Mol.-%, aus 1,4-Phenylenresten und zu
8 bis 92 Mol.-%, vorzugsweise zu 16 bis 84 Mol.-%, aus 4,4'-Biphenylenresten besteht.

**28.** Polyester und Copolyester gemäß mindestens einem der Ansprüche 23 bis 27, dadurch gekennzeichnet, daß sie aus Baugruppen I und IV und ggf. Baugruppen II, III und V aufgebaut sind, und $A^1$, bezogen auf die Gesamtmenge der Baugruppen $A^1$, zu
8 bis 92 Mol.-%, vorzugsweise zu 16 bis 84 Mol.-%, insbesondere zu 30 bis 70 Mol.-%, aus 2,6-Naphthylenresten und zu
8 bis 92 Mol.-%, vorzugsweise zu 16 bis 84 Mol.-%, insbesondere zu 30 bis 70 Mol.-%, aus 4,4'-Biphenylenresten besteht.

**29.** Polyester und Copolyester gemäß mindestens einem der Ansprüche 23 bis 28, dadurch gekennzeichnet, daß sie aus Baugruppen I und IV und ggf. Baugruppen II, III und V aufgebaut sind, und $A^1$ 1,4-Phenylen- und 2,6-Naphthylen- und 4,4'-Biphenylen-Reste enthält, wobei, bezogen auf die Gesamtmenge der Baugruppen $A^1$,
die Summe der 1,4-Phenylen- und 2,6-Naphthylenreste oder
die Summe der 1,4-Phenylen- und 4,4'-Biphenylenreste oder
die Summe der 2,6-Naphthylen- und 4,4'-Biphenylenreste 8 bis 92 Mol.-%,
vorzugsweise 16 bis 84 Mol.-%, insbesondere 30 bis 70 Mol.-%, beträgt.

**30.** Polyester und Copolyester gemäß mindestens einem der Ansprüche 23 bis 29, dadurch gekennzeichnet, daß in ihnen keine Baugruppen der Formel III vorhanden sind.

**31.** Polyester und Copolyester gemäß mindestens einem der Ansprüche 23 bis 30, dadurch gekennzeichnet, daß sie aus Baugruppen I und IV und ggf. Baugruppen II, III und V aufgebaut sind, und $D^1$ Ethylen, Tetramethylen oder 1,4-Dimethylen-cyclohexan, vorzugsweise Ethylen oder Tetramethylen ist.

**32.** Verwendung der Polyester und Copolyester der Ansprüche 20 bis 31 für Beschichtungszwecke, vorzugsweise für Pulverlackierung nach dem Tauchverfahren oder durch Wirbelbettbeschichtung.

**33.** Verwendung der Polyester und Copolyester der Ansprüche 20 bis 31 als pulverförmiger Schmelzkleber oder als Bindemittel für Preßmassen.

**34.** Verwendung der Polyester und Copolyester der Ansprüche 20 bis 31 für die Herstellung extrudierter Formkörper, wie Flaschen, Folien oder Filamente und Fasern für den technischen oder textilen Einsatzbereich.